# EUROPEAN PATENT SPECIFICATION

(11) **EP 0 699 285 B1**
(45) Date of publication and mention of the grant of the patent: **20.01.1999**
(21) Application number: 94917186.2
(22) Date of filing: 09.05.1994
(51) Int. Cl.: F16L 47/00

(54) **DEVICE FOR CONNECTING A PIPE TO A HOLLOW BODY WITH A PLASTIC WALL**
VORRICHTUNG ZUM VERBINDEN EINES ROHRES MIT EINEM KUNSTSTOFF-HOHLKÖRPER
DISPOSITIF PERMETTANT DE RACCORDER UN TUYAU A UN CORPS CREUX AVEC UNE PAROI DE MATIERE PLASTIQUE

(30) Priority: 21.05.1993 NL 9300876
(43) Date of publication of application: 06.03.1996
(73) Proprietor: WAVIN B.V., 8011 CW Zwolle (NL)
(72) Inventor: TER WIJLEN, Hendrikus, NL-7701 AA Dedemsvaart (NL); VAN DIJK, Berend Jan, NL-7776 XA Slagharen (NL)
(74) Representative: Iemenschot, Johannes Andreas, Ir.
(86) International application number: NL9400103
(87) International publication number: WO9428343

(56) References cited:
- EP-A- 0 323 387
- DE-B- 1 178 312
- GB-A- 1 186 130
- US-A- 4 966 397

## Description

The present invention relates to a device for connecting a pipe to a hollow body with a plastic wall according to the preamble of claim 1.

DE-B-1 178 312 discloses a device according to the preamble of claim 1. This known device comprises a feed-through pipe which is inserted from the inside into an opening in the wall of a plastic container for wind screen washer fluid. The pipe has a penetration edge which is forced into the wall by tensioning a nut which is fitted on the threaded stem of the pipe on the outside of the container. For fitting this known device the inside of the container has to be accessable.

Another generally known device comprises a metal feed-through pipe to which an outward projecting flange is welded. A flexible rubber sealing ring is placed between the flange and the outside of the wall of the body. The sealing ring is compressed and a seal is obtained by pulling the flange towards the hollow body using clamping means.

This known device has the disadvantage that a reliable seal is not obtained in all situations with the flexible sealing ring.

The problem of an insufficiently reliable seal occurs in particular during the lining of a pipe, for example a concrete sewer pipe, using a deformed pipe liner part with a wall of thermoplastic material. In this case the pipe liner part, which has, for example, a C-shaped cross-section, is pulled into the sewer pipe. Steam is then fed into the pipe liner part, which is shut off at the ends, with the result that the pipe liner part returns to its undeformed cylindrical shape and comes to rest against the inside of the sewer pipe. As a result of pulling the pipe liner part into the sewer pipe, the outside of the wall thereof will have sustained damage in the form of scratches and grooves. After the pipe liner part has been pulled in, when one or more connections are installed for supplying steam and/or discharging the condensation formed, a sufficiently reliable seal cannot be obtained with the known device.

The object of the invention is to eliminate the abovementioned disadvantages and to provide a simple device which can be installed reliably for the connection of a pipe.

This object is achieved by a device of the type mentioned in the preamble, which is characterized in that the fastening means comprise a first bush, an annular element to be fitted around the body for fixing the first bush around the opening disposed in the wall of the body, and a second bush to be screwed onto the first bush, the second bush pressing the sealing part placed inside the first bush against the wall of the body. It is clear that the feed-through pipe in this case can be a connecting piece between the hollow body and the pipe to be connected thereto, but that the feed-through pipe can also be formed by the end of the pipe to be connected. The penetrating action of the annular wall of the sealing part into the plastic wall of the hollow body produces a very reliable seal. The penetration depth of the annular wall means that any grooves or other damage to the outside of the wall do not affect the seal to be achieved. It is clear that the plastic wall of the body must have a thickness which, on the one hand, allows the annular wall to penetrate a penetration depth into it and, on the other, ensures that, when the annular wall is pressed against the wall, the wall produces such resistance that the annular wall penetrates into the wall, and the wall does not just bend inwards with it. A further advantage of the penetration depth of the annular wall is that the sealing part does not have to be accurately adapted to the measurements of the hollow body, for example to the diameter of a plastic pipe. Finally, the penetrating action permits simple fitting of the device.

In a preferred embodiment, the annular wall extends coaxially with the bore for the feed-through pipe, the outer face of the annular wall is essentially cylindrical, and the inner face of the annular wall is a part of a conical face running inwards from the free edge. This shape of at least the part of the annular wall penetrating into the plastic wall produces a seal which is resistant to high pressures and high temperatures. The outer face and the inner face of the annular wall in this case advantageously form an angle of approximately 10°.

The annular wall is advantageously provided at its free edge with two adjoining bevelled edges, for example forming an angle of 60° between them. This shape of the free edge of the annular wall to be placed against the wall of the hollow body facilitates the penetration of the annular wall into the wall of the hollow body.

In a specific embodiment, the sealing part is a ring shut off by a transverse face, the transverse face being provided with the bore for the feed-through element.

In another preferred embodiment, the sealing part is a metal part. The sealing part could, however, be made of a fibre-reinforced plastic or a similar material.

If the sealing part is a metal part, the feed-through element is advantageously a metal pipe part, and the sealing part is welded to it. This means that the assembly of feed-through element and sealing part can easily be fitted in one piece when a connection for a pipe is being produced.

When a part of the feed-through element projecting through the wall is provided with ribs and grooves on the outside, an additional sealing effect is obtained between the feed-through element and the wall of the body if the opening therein is matched to the size of the feed-through element.

The invention will be explained in greater detail below with reference to the appended drawing, in which:
Fig. 1 shows diagrammatically a detail of the fitting of a deformed pipe liner part in a sewer pipe, in which an example of an embodiment of the device according to the invention and of the method according to the invention are used;
Fig. 2 shows a section in the plane of the device according to the invention in Fig. 1; and
Fig. 3 shows a section of the sealing ring in Fig. 2.

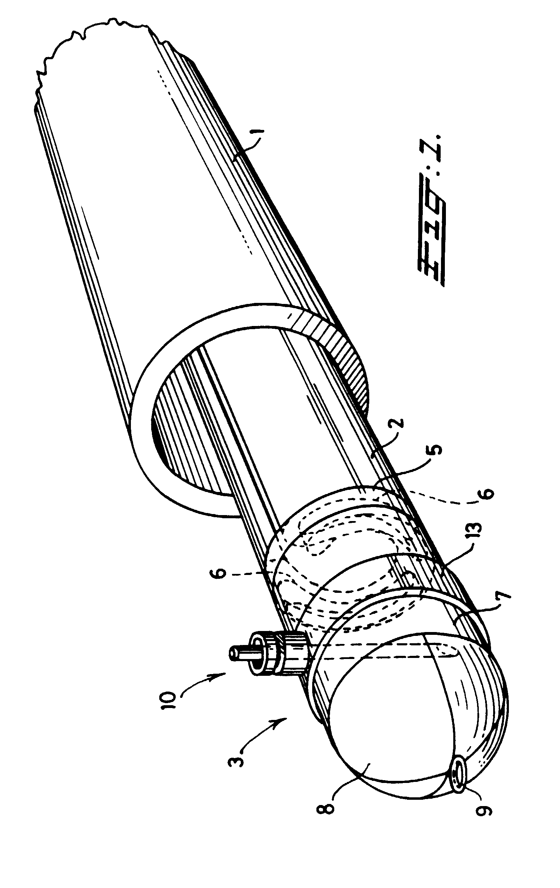

Fig. 1 shows a pipe liner part 2 of thermoplastic material placed in a pipe 1 which is to be lined, in this example a concrete sewer pipe. The pipe liner part illustrated in the deformed state has an essentially C-shaped cross-section, while its original undeformed state is cylindrical. The front end of the pipe liner part is provided with a plastic sealing element 3. The sealing element 3 comprises a flat plastic plate 5 with two passages 6 and a thick-walled cylindrical pipe part 7 of thermoplastic material welded to the flat plate. A hemispherical plastic end cap 8 with a pulling eye 9 is welded to the front side. The pulling eye 9 serves for the fastening of a pull-in cable for pulling the pipe liner part into the sewer pipe. After the pipe liner part 2 has been pulled into the sewer pipe 1 using suitable means, a device 10 for the connection of a condensation discharge pipe is fitted on the cylindrical pipe part 7. For this purpose, the end of the pipe liner part shown in Fig. 1 is then situated in a readily accessible place, for example in a well. A heating and pressure medium source is then connected to a passage opening in a shut-off element (not shown) at the other end of the pipe liner part.

In the case of the method for fitting the pipe liner part 2 taut against the inside of the sewer pipe 1, a heating and pressure medium, for example steam, is supplied to the inside of the pipe liner part 2 which is then still in its state deformed to a C-shape. The temperature of the plastic wall of the pipe liner part rises as a result, and a pressure is exerted on the pipe liner part. As a result of the rise in the temperature of the wall, the shape memory of the thermoplastic material of the pipe liner part, assisted by the pressure, causes the pipe liner part 2 to return virtually to its original cylindrical cross-section.

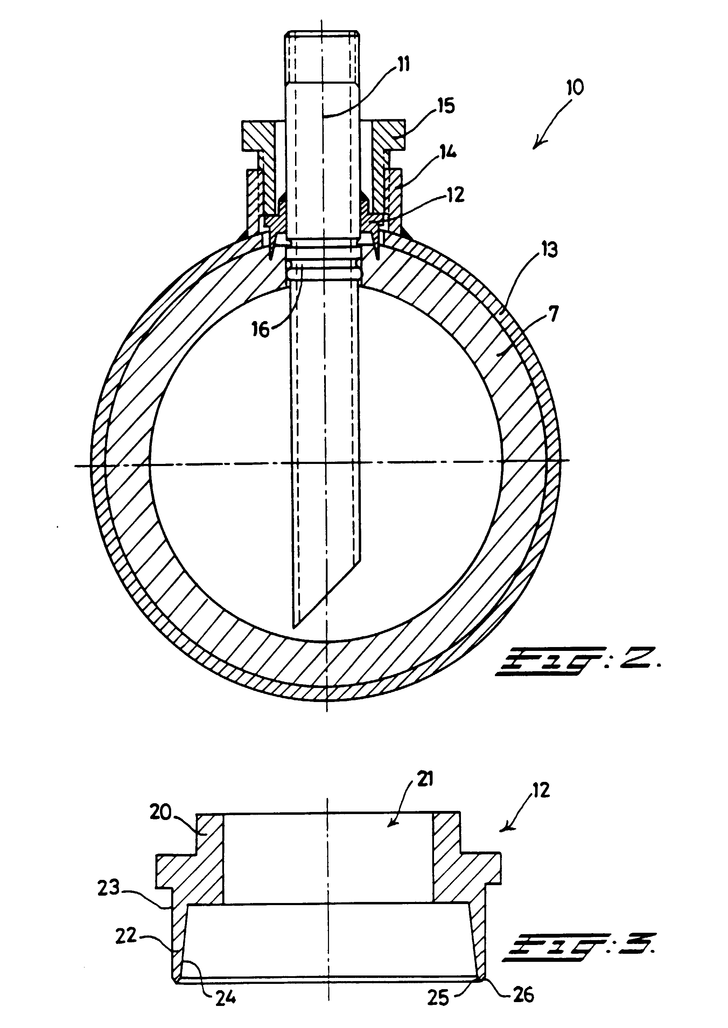

Fig. 2 shows the device 10 when fitted. The device 10 comprises a metal feed-through pipe 11 which is inserted through a bore disposed in the wall of the cylindrical part 7. A metal sealing ring 12, which penetrates a penetration depth into the plastic wall of the cylindrical pipe part 7 when the connection is being made, is welded to the feed-through pipe 11. This produces a reliable seal, even if the cylindrical part 7 is damaged in the process of being pulled in. The sealing ring 12 will be explained in greater detail with reference to Fig. 3.

For fitting the feed-through pipe in a sealing manner, a ring 13, provided with a first metal bush 14 with internal screw thread, is placed around the cylindrical pipe part 7. The feed-through pipe 11 is then inserted into the opening, in which case the sealing ring 12 welded to the feed-through pipe 11 comes to rest inside the first bush 14. If an externally threaded second bush 15 is then screwed into the first bush 14, the metal annular wall of the sealing ring 12 is pressed against the plastic and will penetrate a certain penetration depth into the plastic. A very reliable sealing closure is thus obtained in a simple way.

An additional sealing action is obtained through the fact that the feed-through pipe 11 is provided with grooves and ribs 16 which engage in a sealing manner on the wall of the bore in the cylindrical part 7. As a result of the shape of the part of the annular wall of the sealing ring 12 penetrating into the plastic wall, the opening in the wall is compressed, and a clamping between said wall and the feed-through pipe 11 is produced.

Fig. 3 shows in greater detail the embodiment of the metal sealing ring 12 shown in Fig. 2. The sealing ring 12 comprises a transverse face 20 in which a bore 21 for the feed-through pipe 11 is provided. The sealing ring 12 also has an annular wall 22 forming a penetrating edge which penetrates into the plastic wall. The outer face 23 of the annular wall 22 is cylindrical, while the inner face 24 is a part of a conical face running from the free edge inwards. The outer face 23 and the inner face 24 in this case form an angle of approximately 10°.

In order to make it easier to press into the wall, the annular wall 22 is provided at its free edge with two adjoining bevelled edges 25, 26, which form an angle of 60° between them.

It is clear that the device as claimed can be designed in many different ways and can be used in many situations. These are in particular situations in which a temporary connection facility must be provided, since in such a situation the possible weakening of the plastic wall through the metal annular wall penetrating it has little negative effect on the load-bearing capacity of the plastic wall. For example, in an embodiment not shown the feed-through pipe could be provided with external screw thread, by means of which the feed-through pipe could be screwed firmly into the plastic wall. A reliable seal is then obtained again through the fact that the annular wall connected in a sealing manner to the feed-through pipe cuts into the wall. The free edge of the annular wall could also be provided with a sort of toothing, instead of bevelled edges, in order to promote penetration or cutting of the annular wall into the plastic wall.

## Claims

1. Device (10) for connecting a pipe to a hollow body (7) with a plastic wall, comprising a feed-through pipe (11) which can be inserted into an opening in the wall of the body, a sealing part (12) which has a side for pressing against the outside of the wall of the body, and fastening means for fixing the feed-through pipe in a sealing manner relative to the body, wherein the sealing part (12) is a part made of a rigid material which is provided with a bore (21) through which the feed-through pipe (11) can project in a sealing manner, and which at its side for pressing against the outside of the wall of the body (7) has a projecting annular wall (22) lying all round the bore for the feed-through pipe, the annular wall forming a penetration edge which can penetrate into the plastic wall of the body (7),
**characterized in that** the fastening means comprise a first bush (14), an annular element (13) to be fitted around the hollow body (7), for fixing the first bush around the opening disposed in the wall of the body, and a second bush (15) to be screwed onto the first bush, the second bush (15) pressing the annular wall (22) of the sealing part (12) placed inside the first bush (14) against the wall of the body.

2. Device according to claim 1, **characterized in that** the annular wall (22) extends coaxially with the bore (21) for the feed-through pipe, the outer face (23) of the annular wall is essentially cylindrical, and the inner face (24) of the annular wall is a part of a conical face running inwards from the free edge.

3. Device according to claim 2, **characterized in that** the outer face (23) and the inner face (24) of the annular wall (22) form an angle of approximately 10°.

4. Device according to claim 2 or 3, **characterized in that** the annular wall (22) is provided at its free edge with two adjoining bevelled edges (25, 26).

5. Device according to one or more of the preceding claims, **characterized in that** the sealing part (12) is a ring shut off by a transverse face (20), the transverse face being provided with the bore (21) for the feed-through pipe.

6. Device according to one or more of the preceding claims, **characterized in that** the sealing part (12) is a metal part.

7. Device according to claim 6, **characterized in that** the feed-through pipe (11) is a metal pipe part, and the sealing part (12) is welded thereto.

8. Device according to one or more of the preceding claims, **characterized in that** a part of the feed-through pipe (11) to be inserted through the wall of the hollow element (7) is provided with ribs and grooves (16) on the outside.

## Patentansprüche

1. Vorrichtung (10) zum Verbinden eines Rohres mit einem Hohlkörper (7) mit einer Kunststoffwand, bestehend aus einem Durchführungsrohr (11), das in eine Öffnung in der Wand des Hohlkörpers eingesetzt werden kann, einem Dichtungsteil (12), das eine Seite zum Drücken gegen die Außenseite der Wand des Hohlkörpers aufweist, und Befestigungsmitteln zum Festlegen des Durchführungsrohrs abdichtend in bezug auf den Hohlkörper, wobei das Dichtungsteil (12) ein aus einem starren Material hergestelltes Teil ist, das mit einer Bohrung (21) versehen ist, durch die das Durchführungsrohr (11) abdichtend vorragen kann, und das an seiner Seite zum Drücken gegen die Außenseite der Wand des Hohlkörpers (7) eine vorstehende Ringwand (22) aufweist, die rund um die Bohrung für das Durchführungsrohr liegt, wobei die ringförmige Wand einen Eindringrand bildet, der in die Kunststoffwand des Hohlkörpers (7) eindringen kann, dadurch gekennzeichnet, daß die Befestigungsmittel eine erste Buchse (14), ein um den Hohlkörper (7) zum Festlegen der ersten Buchse um die in der Wand des Hohlkörpers angeordnete Öffnung anzubringendes Ringelement (13) und eine zweite Buchse (15), die auf die erste Buchse aufzuschrauben ist, umfaßt, wobei die zweite Buchse (15) die Ringwand (22) des innerhalb der ersten Buchse (14) angebrachten Dichtungsteils (12) gegen die Wand des Hohlkörpers drückt.

2. Vorrichtung nach Anspruch 1, dadurch gekennzeichnet, daß die Ringwand (22) koaxial mit der Bohrung (21) für das Durchführungsrohr verläuft, die Außenseite (23) der Ringwand im wesentlichen zylindrisch ist und die Innenseite (24) der Ringwand Teil einer von dem freien Rand nach innen laufenden konischen Fläche ist.

3. Vorrichtung nach Anspruch 2, dadurch gekennzeichnet, daß die Außenseite (23) und die Innenseite (24) der Ringwand (22) einen Winkel von etwa 10° bilden.

4. Vorrichtung nach Anspruch 2 oder 3, dadurch gekennzeichnet, daß die Ringwand (22) an ihrem freien Rand mit zwei aneinandergrenzenden Schrägkanten (25,26) versehen ist.

5. Vorrichtung nach einem oder mehreren der vorhergehenden Ansprüche, dadurch gekennzeichnet, daß das Dichtungsteil (12) ein von einer Querseite (20) abgeschlossener Ring ist und die Querseite mit der Bohrung (21) für das Durchführungsrohr versehen ist.

6. Vorrichtung nach einem oder mehreren der vorhergehenden Ansprüche, dadurch gekennzeichnet, daß das Dichtungsteil (12) ein Metallteil ist.

7. Vorrichtung nach Anspruch 6, dadurch gekennzeichnet, daß das Durchführungsrohr (11) ein Metallteil ist und das Dichtungsteil (12) mit diesem verschweißt ist.

8. Vorrichtung nach einem oder mehreren der vorhergehenden Ansprüche, dadurch gekennzeichnet, daß ein Teil des durch die Wand des Hohlkörpers (7) einzusetzenden Durchführungsrohrs (11) mit Rippen und Nuten (16) auf der Außenseite versehen ist.

## Revendications

1. Dispositif (10) pour raccorder un tuyau à un corps creux (7) comportant une paroi en matière plastique, comprenant un tuyau traversant (11) qui peut être inséré dans une ouverture de la paroi du corps, un élément d'étanchéité (12) qui comporte un côté destiné à exercer une pression contre l'extérieur de la paroi du corps, et des moyens de fixation pour fixer le tuyau traversant de manière étanche par rapport au corps, dans lequel l'élément d'étanchéité (12) est un élément constitué d'un matériau rigide qui est muni d'un alésage (21) à travers lequel le tuyau traversant (11) peut faire saillie de manière étanche, et qui, au niveau de son côté destiné à exercer une pression contre l'extérieur de la paroi du corps (7), comporte une paroi annulaire saillante (22) s'étendant tout autour de l'alésage prévu pour le tuyau traversant, la paroi annulaire formant un bord de pénétration qui peut pénétrer dans la paroi en matière plastique du corps (7), caractérisé en ce que les moyens de fixation comprennent un premier manchon (14), un élément annulaire (13) destiné à être ajusté autour du corps creux (7) pour fixer le premier manchon autour de l'ouverture située dans la paroi du corps, et un second manchon (15) destiné à être vissé sur le premier manchon, le second manchon (15) pressant la paroi annulaire (22) de l'élément d'étanchéité (12) placé à l'intérieur du premier manchon (14) contre la paroi du corps.

2. Dispositif selon la revendication 1, caractérisé en ce que la paroi annulaire (22) s'étend coaxialement avec l'alésage (21) prévu pour le tuyau traversant, en ce que la face extérieure (23) de la paroi annulaire est essentiellement cylindrique, et en ce que la face intérieure (24) de la paroi annulaire constitue une partie d'une face conique s'étendant intérieurement depuis le bord libre.

3. Dispositif selon la revendication 2, caractérisé en ce que la face extérieure (23) et la face intérieure (24) de la paroi annulaire (22) forment un angle d'approximativement 10°.

4. Dispositif selon la revendication 2 ou 3, caractérisé en ce que la paroi annulaire (22) est munie au niveau de son bord libre de deux bords biseautés contigus (25, 26).

5. Dispositif selon une ou plusieurs des revendications précédentes, caractérisé en ce que l'élément d'étanchéité (12) est un anneau obstrué par une face transversale (20), la face transversale étant munie de l'alésage (21) prévu pour le tuyau traversant.

6. Dispositif selon une ou plusieurs des revendications précédentes, caractérisé en ce que l'élément d'étanchéité (12) est un élément métallique.

7. Dispositif selon la revendication 6, caractérisé en ce que le tuyau traversant (11) est un élément de tuyau métallique, et en ce que l'élément d'étanchéité (12) est soudé à celui-ci.

8. Dispositif selon une ou plusieurs des revendications précédentes, caractérisé en qu'une partie du tuyau traversant (11) destinée à être insérée à travers la paroi de l'élément creux (7) est munie de nervures et de rainures (16) sur l'extérieur.
